# EUROPÄISCHE PATENTSCHRIFT

(11) **EP 1 154 838 B1**
(45) Veröffentlichungstag und Bekanntmachung des Hinweises auf die Patenterteilung: **12.03.2003**
(21) Anmeldenummer: 00910620.4
(22) Anmeldetag: 28.01.2000
(51) Int. Cl.: B01D 61/18, B01D 36/00

(54) **FILTERAUFSATZ ZUR VAKUUMFILTRATION**
FILTER ASSEMBLY FOR VACUUM FILTRATION
ENSEMBLE FILTRANT POUR FILTRATION SOUS VIDE

(30) Priorität: 11.02.1999 DE 19905645
(43) Veröffentlichungstag der Anmeldung: 21.11.2001
(73) Patentinhaber: SARTORIUS AG, 37075 Göttingen (DE)
(72) Erfinder: GRAUS, Andreas, D-37176 Nörten-Hardenberg (DE); SCHÄFER, Christian, D-37170 Uslar (DE)
(86) Internationale Anmeldenummer: EP0000651
(87) Internationale Veröffentlichungsnummer: WO00047310

(56) Entgegenhaltungen:
- US-A- 4 298 358
- US-A- 5 468 388
- US-A- 5 603 900

## Beschreibung

Die Erfindung betrifii einen Filteraufsatz zur Vakuumfiltration wässriger Medien.

Die Erfindung wird angewendet zur Klar- und Sterilfiltration wässriger Medien, die vorzugsweise im Litermaßstab in Labors und Technika der Biotechnologie, Chemie, Medizin und weiterer Bereiche anfallen oder benötigt werden. So kann der Filteraufsatz beispielsweise zur Filtration von Gewebekulturlösungen, die aus einem Vorratsbehälter angesaugt werden, benutzt werden.

Aus der EP 0 595 847 B1 ist ein Filteraufsatz zur Vakuumfiltration bekannt, der fluiddicht auf einem Filtratbehälter befestigt ist. Der Filteraufsatz schließt einen abgestützten Flachfilter an den Rändern fluiddicht ein, sodaß auf der Anströmseite des Flachfilters ein eingangsseitiger Gehäuseraum gebildet ist, an dem sich ein Anschlußstutzen für die Zuführung von zu filtrierender Flüssigkeit befindet, und abströmseitig ist ein in den Filtratbehälter hineinragender Filtratablauf angebracht. Außerdem durchdringt ein Kanal den Filteraufsatz, welcher mit seinem einen Ende in den Filtratbehälter ragt und an seinem anderen Ende einen Anschluß für Vakuum besitzt. Der Flachfilter besteht aus einer hydrophilen mikroporösen Membran, die hydrophobe Spots besitzt.
Durch Anlegen eines Vakuums wird über die hydrophoben Spots des Flachfilters die zu filtrierende Flüssigkeit über den Anschluß am eingangsseitigen Gehäuseraum, der über eine Leitung mit einem Vorratsbehälter für die zu filtrierende Flüssigkeit verbunden ist, angesaugt, passiert den hydrophilen Teil der Membran und läuft über den abströmseitig angebrachten Filtratablauf in den Filtratbehälter ab. Mitgerissene Luftblasen, die den hydrophilen Teil der Membran für die Filtration blockieren würden, sollen über die hydrophoben Spots durch die Membran abgeführt werden.
Nachteilig ist bei diesem Filteraufsatz der geringe Filtratfluß, der pro Zeiteinheit die hydrophile Membran passiert, weil die für die Filtration zur Verfügung stehende hydrophile Membranfläche auf Grund der Anordnung als Flachfilter und der zusätzlich aufgebrachten hydrophoben Spots auf der Membran relativ klein ist. Hinzu kommt, daß sich Luftblasen auf den hydrophilen von hydrophoben Spots freien Bereichen der Membran festsetzen können, und dadurch diese Bereiche für eine Filtration zumindest vorübergehend ausfallen, solange die Luftblasen nicht auf die hydrophoben Spotbereiche der Membran gewirbelt werden. Darüberhinaus verblockt eine derartige Membran sehr schnell, so daß Filteraufsätze der beschriebenen Art für die Vakuumfiltration größerer Flüssigkeitsmengen und von Flüssigkeiten mit Deckschicht bildenen Substanzen ungeeignet sind.

Der Erfindung liegt daher die Aufgabe zu Grunde, einen Filteraufsatz zur Vakuumfiltration wässriger Medien vorzuschlagen, mit dem die genannten Nachteile überwunden werden.
Die Aufgabe wird durch den Gegenstand des Anspruchs 1 gelöst. Vorteilhafte Weiterbildungen der Erfindung werden durch die Kennzeichen der Unteransprüche definiert.
Erfindungsgemäß wird der Filteraufsatz zur Vakuumfiltration für wässrige Medien mit einem patronenartigen Filterelement ausgestattet, welches in einem umschließenden, zylindrischen Gehäuse angeordnet ist und einen einlaßseitigen Gehäuseraum abtrennt. Der einlassseitige Gehäuseraum ist radial um das Filterelement herum gelegen und steht mit dem Raum axial oberhalb des Filterelements in kommunizierender Verbindung. Das Gehäuse ist mit einem Einlaß und mit einem Auslaß ausgestattet. Das patronenartige Filterelement besteht mindestens aus einem rohrförmigen, plissierten, hydrophilen, mikroporösen Membranfilter, das an den Stirnseiten von einer unteren und einer oberen Endkappe fluiddicht eingefaßt ist. Ein im Inneren des rohrförmigen Membranfilters gebildeter Filtratraum ist über die untere eine zentrale Öffnung aufweisende Endkappe mit dem Ausgang des Gehäuses verbunden und steht mit einem Unterdruck aufweisenden Filtratbehälter in kommunizierender Verbindung. Die obere Endkappe besitzt ebenfalls eine zentrale Öffnung, die von einer hydrophoben für Gase, einschließlich Luft durchlässigen Membran abgeschlossen ist.
Durch Anbringung der hydrophoben Membran auf der oberen Endkappe des Filterelements besteht die Möglichkeit, die Fläche der hydrophoben Membran in weiten Grenzen variabel zu gestalten, wodurch ein schnelles Entfernen der Luft aus dem einlaßseitigen Bereich des Filtrationssystems ermöglicht wird. Außerdem ist damit sichergestellt, daß sich kein Luftpolster im einlaßseitigen Gehäuseraum ansammeln kann, das den Flüssigkeitsspiegel des zu filtrierenden Mediums unter die obere Endkappe drücken könnte. Damit ist gewährleistet, daß die gesamte hydrophile Membran von dem zu filtrierenden Medium bedeckt ist und für die Filtration voll wirksam werden kann. Durch Verwendung des patronenartigen Filterelements mit einer plissierten hydrophilen Membran an Stelle eines Flachfilters ist es darüberhinaus möglich, große Flüssigkeitsmengen pro Zeiteinheit mittels des erfindungsgemäßen Filteraufsatzes zu filtrieren. Über eine Veränderung des Durchmessers und der Länge des patronenartigen Filterelements kann der Filteraufsatz bezüglich seiner Membranfläche der jeweiligen Filtrationsaufgabe abgepaßt werden und zwar hinsichtlich des zu filtrierenden Volumens als auch der Art des Mediums. So werden Medien, die Stoffe enthalten, welche zur Verblockung der Membran führen, mit Filteraufsätzen filtriert, die über ein patronenartiges Filterelement mit einer großen hydrophilen Membran verfügen. Durch die örtliche Trennung zwischen hydrophiler und hydrophober Membran wird die Fläche der hydrophilen Membran nicht durch hydrophobe Anteile verringert, sodaß auch aus diesem Grund die gesamte hydrophile Membranfläche des patronenartigen Filterelements für die Filtration zur Verfügung steht.

Als optimale Fläche für die hydrophobe Membran haben sich 0,5 bis 1,5 cm² erwiesen. Für besonders große Filteraufsätze kann die hydrophobe Membranen annähernd von der Größe des von der hydrophilen rohrförmigen Membran umschlossenen Querschnitts auf der oberen Endkappe angebracht werden oder es wird ein separates Filtermodul mit hydrophoben Membranen auf der oberen Endkappe angebracht.

In einer vorteilhaften Ausführungsform der Erfindung ist die hydrophobe Membran zur Endkappe geneigt angeordnet, wobei der Neigungswinkel vorzugsweise im Bereich größer 0 ° bis 90 ° liegen sollte, vorzugsweise beträgt er mehr als 20 °. Dadurch wird erreicht, daß sich auf der hydrophoben Membran kein Film des zu filtrierenden Mediums ansammeln kann, der die Abführung der Luft beeinträchtigen könnte. Sinkt nämlich der Oberflächenspiegel des zu filtrierenden Mediums unter die obere Endkappe, läuft die Flüssigkeit von der geneigten Membran ab, so daß ihre Fläche voll für die Luftpassage zur Verfügung steht. Vorteilhafterweise ist die Öffnung der oberen Endkappe in Form eines Stutzens und mit einer Filterunterstützung ausgebildet, auf dem beziehungsweise der sich die hydropbobe Membran befindet.
Vorzugsweise wird die hydrophobe Membran so ausgewählt, daß sie Wasser erst ab einer Druckdifferenz von mehr als 1 bar passieren läßt und sie somit als Flüssigkeitssperre wirkt. Dadurch wird sichergestellt, daß das gesamte zu filtrierende Medium die hydrophile Membran des patronenartigen Filterelementes passieren muß.
Als hydrophobe Membran werden bevorzugt solche mit Porengrößen im Bereich von 0,1 bis 0,2 µm mit niedriger Oberflächenspannung ausgewählt, insbesondere wenn es auf eine Sterilfiltration des Mediums ankommt. Andernfalls könnten Mikroorganismen der Zellfragmente, die mit der Luft mitgerissen werden, die hydrophobe Membran passieren und das Filtrat kontaminieren. Vorteilhafterweise wird die hydrophobe Membran so ausgewählt, daß sie einen so geringen Luftdurchfluß hat, daß zum Ende der Vakuumfiltration beim Leersaugen des Filteraufsatzes, auch das letzte wässrige Medium die hydrophile Membran noch zügig und restlos passiert.

In einer weiteren bevorzugten Ausführungsform der Erfindung ist das patronenartige Filterelement zur Erhöhung der Betriebszeit mit einem Vorfilter ausgestattett, das anströmseitig vor der hydrophilen Membran angeordnet ist. Dabei ist es günstig, wenn der benetzte Vorfilter Luft erst ab einer Druckdifferenz von 1 bar passieren läßt. Andernfalls besteht die Gefahr, daß sich zwischen der Vorfilterlage und der hydrophilen Membran Luftblasen oder eine Luftschicht ansammeln, die die Filtration beeinträchtigen oder beim erneuten Anfahren der Vorrichtung die Filtration blockieren würden.

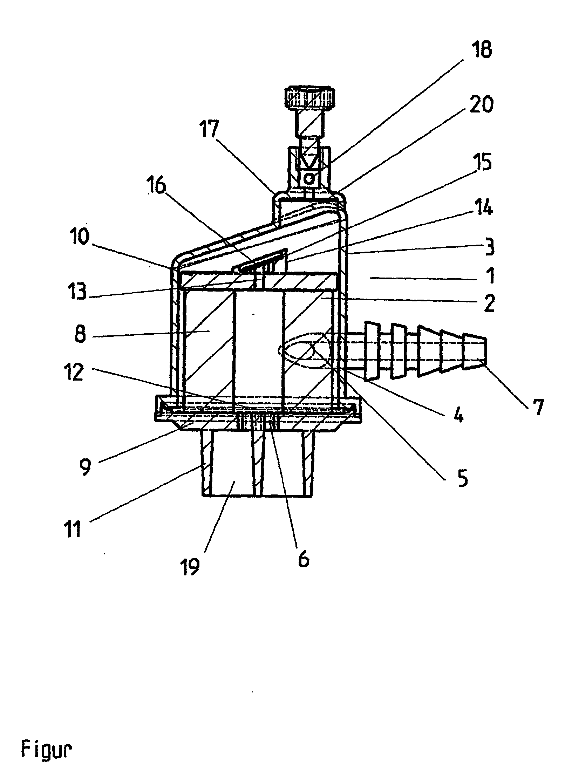

In einer weiteren Ausführungsform der Erfindung ist der Einlaß tangential im unteren Teil der zylindrischen Gehäusewand des Filteraufsatzes angebracht. Dadurch wird das zu filtrierende Medium nicht direkt in die Plissierfalten gedrückt, was zu vorzeitigen örtlichen Verblockungen der Membran führen würde, sondern es umströmt das patronenartige Filterelement in einer spiralförmig aufwärts gerichteten Fließbewegung. Dadurch werden außerdem mitgerissene Luftblasen veranlaßt nach oben zu steigen, bevor sie die hydrophile Membranoberfläche erreicht haben, und sie können somit besser über die hydrophobe Membran abgesaugt werden, was sich günstig auf die Steigerung der Filtrationsleistung des erfindungsgemäßen Filteraufsatzes auswirkt.
Eine andere Ausführungsform der Erfindung ist dadurch gekennzeichnet, dass das Gehäuse mit einem Belüftungsstutzen ausgestattet ist, welcher am einlaßseitigen Gehäuseraum oberhalb des patronenartigen Filterelements angeordnet und durch ein Belüftungsventil verschließbar ist. Dadurch wird erreicht, daß beim Öffnen des Belüftungsventils die Filtration rasch und bequem bei äußerst geringem Nachlauf an Filtrat unterbrochen werden kann und die im einlaßseitigen Gehäuseraum befindliche Menge an zu filtrierendem Medium in den Sammelbehälter zurückläuft.
Zusätzlich kann der Belüftungsstutzen vom zu belüftenden Gehäuseraum durch ein hydrophobes gasdurchlässiges Filter, vorzugsweise durch eine Membran aus Polytetrafluorethylen, mit einer Porengröße im Bereich von 0,2 bis 0,45 µm getrennt sein. Das ist besonders vorteilhaft bei der Filtration gefährlicher oder steriler Medien, weil durch das hydrophobe gasdurchlässige Filter, das den Belüftungsstutzen zur Atmosphäre hin steril abdichtet, weder Medium nach außen dringen noch dekontaminierende Mikroorganismen in die Filtrationsvorrichtungen eindringen können.
Die Erfindung wird nun an Hand der Figur näher erläutert.
Die Figur zeigt einen Schnitt durch eine erfindungsgemäße Ausführungsform des Filteraufsatzes (**1**) zur Vakuumfiltration wässriger Medien mit einem patronenartigen Filterelement (**2**), das in einem umschließenden, zylindrischen Gehäuse (**3**) angeordnet ist und einen einlaßseitigen Gehäuseraum (**4**) abtrennt. Der einlassseitige Gehäuseraum (4) ist radial um das Filterelement (2) herum gelegen und steht mit dem Raum axial oberhalb des Filterelements (2) in kommunizierender Verbindung. Das Gehäuse (3) ist mit einem Einlaß (**5**) und einem Auslaß (**6**) ausgestattet. Zur Filtration wird der Einlaßstutzen (**7**) des im unteren Bereich des zylindrischen Gehäuses (**3**) tangential angeordneten Einlasses (**5**) mit einem nicht dargestellten Vorratsbehälter, in dem sich das zu filtrierende Medium befindet, verbunden. Das patronenartige Filterelement (**2**) besteht aus einem rohrförmigen, plissierten, hydrophilen, mikroporösen Membranfilter (**8**), das an seinen Stirnseiten von einer unteren (**9**) und oberen Endkappe (**10**) fluiddicht eingefaßt ist. In der gezeigten Ausführungsform bildet die untere Endkappe (**9**) gleichzeitig die Gehäusebasis, welche mit einem Anschlußadapter (**11**) für den Anschluß an ein nicht dargestelltes Filtratgefäß ausgestattet ist, an das für die Durchführung der Filtration ein Unterdruck angelegt wird. Dazu kann das Filtratgefäß direkt oder über ein nicht dargestelltes Zwischenstück zwischen Filteraufsatz (**1**) und Filtratgefäß an die Vakuumquelle angeschlossen werden. Die zentrale Öffnung (**12**) der unteren Endkappe (**9**) ist mit dem Ausgang (**6**) des Gehäuses (**3**) verbunden. Die obere Endkappe (**10**) besitzt eine zentrale Öffnung (**13**) mit einem Stutzen (**14**) und einer Filterunterstützung (**15**), auf der eine hydrophobe Membran (**16**) randseitig fluiddicht aufgebracht ist. Außerdem ist das Gehäuse (**3**) mit einem Belüftungsstutzen (**17**) ausgestattet, welcher am einlaßseitigen Gehäuseraum (**4**) oberhalb des patronenartigen Filterelements (**2**) angeordnet und durch ein Belüftungsventil (**18**) verschließbar ist. Um Dekontaminationen des zu filtrierenden Mediums und einen Austritt des Mediums aus dem Belüftungsstutzen (**17**) nach außen zu vermeiden, ist der Belüftungsstutzen (**17**) vom zu belüftenden einlaßseitigen (**4**) und auslaßseitigen Gehäuseraum (**19**) durch ein hydrophobes luftdurchlässiges Filter (**20**) getrennt.
Zur Durchführung der Filtration wird über die hydrophobe Membran (**16**) Luft aus der Vorrichtung entfernt, indem über den Ausgang (**6**) des Gehäuses (**3**) des Filteraufsatzes (**1**) Unterdruck angelegt wird, wodurch das zu filtrierende wässrige Medium in den einlaßseitigen Gehäuseraum (**4**) einströmt und die hydrophile Membran (**8**) des patronenartigen Filterelementes (**2**) passiert. Das Filtrat fließt zusammen mit der die hydrophobe Membran (**16**) passierenden Luft über den Filtratraum und die zentrale Öffnung (**12**) der unteren Endkappe (**9**) in das Filtratgefäß ab.

### Liste der Bezugszeichen:

- 1: Filteraufsatz
- 2: patronenartiges Filterelement
- 3: zylindrisches Gehäuse
- 4: einlaßseitiger Gehäuseraum
- 5: Einlaß
- 6: Auslaß
- 7: Einlaßstutzen
- 8: rohrförmiges, plissiertes, hydrophiles, mikroporöses Membranfilter
- 9: untere Endkappe
- 10: obere Endkappe
- 11: Anschlußadapter
- 12: zentrale Öffnung der unteren Endkappe
- 13: zentrale Öffnung der oberen Endkappe
- 14: Stutzen
- 15: Filterunterstützung
- 16: hydrophobe Membran
- 17: Belüftungsstutzen
- 18: Belüftungsventil
- 19: auslaßseitiger Gehäuseraum
- 20: hydrophobes luftdurchlässiges Filter

## Patentansprüche

1. Filteraufsatz (1) zur Vakuumfiltration für wässrige Medien mit einem patronenartigen Filterelement (2), welches in einem umschließenden, zylindrischen Gehäuse (3) angeordnet ist und einen einlaßseitigen radial um das Filterelement (2) herum gelegenen Gehäuseraum (4) abtrennt, der mit dem Raum axial oberhalb des Filterelements (2) in kommunizierender Verbindung steht, wobei das Gehäuse (3) mit einem Einlaß (5) und einem Auslaß (6) ausgestattet ist, und welches mindestens aus einem rohrförmigen, plissierten, hydrophilen, mikroporösen Membranfilter (8) besteht, das an den Stirnseiten von einer unteren (9) und einer oberen Endkappe (10), die beide zentrale Öffnungen (12, 13) aufweisen, fluiddicht eingefaßt ist, wobei die zentrale Öffnung (12) der unteren Endkappe (9) mit dem Auslaß (6) des Gehäuses (3) verbunden ist, der mit einem Filtratbehälter in kommunizierender Verbindung steht, und wobei die zentrale Öffnung (13) der oberen Endkappe (10) von einer hydrophoben Membran (16) abgeschlossen ist.

2. Filteraufsatz (1) nach Anspruch 1, **dadurch gekennzeichnet, daß**
die hydrophobe Membran (16) zur oberen Endkappe (10) geneigt angebracht ist.

3. Filteraufsatz (1) nach Anspruch 1 oder 2, **dadurch gekennzeichnet, daß**
die Öffnung (13) der oberen Endkappe (10) in Form eines Stutzens (14) und mit einer Filterunterstützung (15) ausgebildet ist.

4. Filteraufsatz (1) nach den Ansprüchen 1 bis 3, **dadurch gekennzeichnet, daß**
die hydrophobe Membran (16) Wasser erst ab einer Druckdifferenz von mehr als 1 bar passieren läßt.

5. Filteraufsatz (1) nach Anspruch 4, **dadurch gekennzeichnet, daß**
die hydrophobe Membran (16) Porengrößen im Bereich von 0,1 bis 0,2 µm besitzt.

6. Filteraufsatz (1) nach den vorstehenden Ansprüchen, **dadurch gekennzeichnet, daß**
das patronenartige Filterelement (2) zur Erhöhung der Betriebszeit mit einem Vorfilter ausgestattet ist, das anströmseitig vor der hydrophilen Membran (8) angeordnet ist.

7. Filteraufsatz (1) nach Anspruch 6, **dadurch gekennzeichnet, daß**
der benetzte Vorfilter Luft erst ab einer Druckdifferenz von 1 bar passieren läßt

8. Filteraufsatz (1) nach den vorstehenden Ansprüchen, **dadurch gekennzeichnet, daß** der Einlaß (5) tangential im unteren Teil der zylindrischen Gehäusewand angebracht ist.

9. Filteraufsatz (1) nach den vorstehenden Ansprüchen, **dadurch gekennzeichnet, daß**
das Gehäuse (3) mit einem Belüftungsstutzen (17) ausgestattet ist, welcher am einlaßseitigen Gehäuseraum (4) oberhalb des patronenartigen Filterelements (2) angeordnet und durch ein Belüftungsventil (18) verschließbar ist.

10. Filteraufsatz (1) nach Anspruch 9, **dadurch gekennzeichnet, daß**
der Belüftungsstutzen (17) vom zu belügenden Gehäuseraum (4) durch ein hydrophobes gasdurchlässiges Filter (20) mit einer Porengröße im Bereich von 0,2 bis 0,45 µm getrennt ist.

## Claims

1. Filter attachment (1) for vacuum filtration for aqueous media, comprising a cartridge-like filter element (2) which is arranged in an enclosing, cylindrical housing (3) and separates off an inlet housing chamber (4) disposed radially around the filter element (2), and which is disposed in communicating connection with the space axially above the filter element (2), wherein the housing (2) is equipped with an inlet (5) and an outlet (6), the filter element (2) consisting at least of a tubular, pleated, hydrophilic, microporous membrane filter (8) which is fluid-tightly bordered at the end faces by a lower end cap (9) and an upper end cap (10) which both have central openings (12, 13), wherein the central opening (12) of the lower end cap (9) is connected with the outlet (6) of the housing (3), which is disposed in communicating connection with a filtrate container, and wherein the central opening (13) of the upper end cap (10) is closed off by a hydrophobic membrane (16).

2. Filter attachment (1) according to claim 1, **characterised in that** the hydrophobic membrane (6) is mounted at an inclination relative to the upper end cap (10).

3. Filter attachment (1) according to claim 1 or 2, **characterised in that** the opening (13) of the upper end cap (10) is constructed in the form of a stub pipe (14) and with a filter support (15).

4. Filter attachment (1) according to claims 1 to 3, **characterised in that** the hydrophobic membrane (16) allows water to pass only from a pressure difference of more than 1 bar.

5. Filter attachment (1) according to claim 4, **characterised in that** the hydrophobic membrane (16) has pore sizes in the range of 0.1 to 0.2 µm.

6. Filter attachment (1) according to the preceding claims, **characterised in that** the cartridge-like filter element (2) is equipped with a pre-filter, which is arranged at the upstream side in front of the hydrophilic membrane (8), for increase in the operating time.

7. Filter attachment (1) according to claim 6, **characterised in that** the pre-filter in wet state allows air to pass only from a pressure difference of 1 bar.

8. Filter attachment (1) according to the preceding claims, **characterised in that** the inlet (4) is mounted tangentially in the lower part of the cylindrical housing wall.

9. Filter attachment (1) according to the preceding claims, **characterised in that** the housing (3) is equipped with a ventilating stub pipe (17) which is arranged at the inlet housing chamber (4) above the cartridge-like filter element (2) and is closable by a ventilating valve (18).

10. Filter attachment (1) according to claim 9, **characterised in that** the ventilating stub pipe (17) is separated from the housing chamber (4), which is to be ventilated, by a hydrophobic, gas-permeable filter (20) with a pore size in the range of 0.2 to 0.45 µm.

## Revendications

1. Insert de filtre (1) destiné à la filtration sous vide de fluides aqueux, comportant un élément filtrant (2) de type cartouche qui est disposé dans un boîtier cylindrique (3) l'entourant, et qui subdivise un compartiment d'entrée (4) de boîtier situé radialement autour de l'élément filtrant (2), qui est en liaison de communication avec l'espace situé axialement au-dessus de l'élément filtrant (2), le boîtier (3) étant muni d'une entrée (5) et d'une sortie (6), et qui est constitué d'au moins un filtre (8) à membrane hydrophile microporeuse plissée de forme tubulaire, dont les faces frontales sont obturées de façon étanche aux fluides par un capuchon d'extrémité inférieur (9) et par un capuchon d'extrémité supérieur (10), comportant tous les deux des orifices centraux (12, 13), l'orifice central (12) du capuchon d'extrémité inférieur (9) étant relié à la sortie (6) du boîtier (3), cette dernière étant en liaison de communication avec un récipient de filtrat, et l'orifice central (13) du capuchon d'extrémité supérieur (10) étant obturé par une membrane hydrophobe (16).

2. Insert de filtre (1) selon la revendication 1, **caractérisé en ce que** la membrane hydrophobe (16) est fixée en étant inclinée vers le capuchon d'extrémité supérieur (10).

3. Insert de filtre (1) selon la revendication 1 ou 2, **caractérisé en ce que** l'orifice (13) du capuchon d'extrémité supérieur (10) est agencé sous la forme d'une tubulure (14), et comporte un support (15) de filtre.

4. Insert de filtre (1) selon les revendications 1 à 3, **caractérisé en ce que** la membrane hydrophobe (16) ne laisse passer l'eau qu'à partir d'une pression différentielle supérieure à 1 bar.

5. Insert de filtre (1) selon la revendication 4, **caractérisé en ce que** la grosseur des pores de la membrane hydrophobe (16) se situe dans la plage comprise entre 0,1 et 0,2 µm.

6. Insert de filtre (1) selon les revendications précédentes, **caractérisé en ce que** dans le but d'augmenter le temps de fonctionnement, l'élément filtrant (2) de type cartouche est équipé d'un filtre préliminaire, qui est disposé du côté amont devant la membrane hydrophile (8).

7. Insert de filtre (1) selon la revendication 6, **caractérisé en ce que** le filtre préliminaire mouillé ne laisse passer l'air qu'à partir d'une pression différentielle de 1 bar.

8. Insert de filtre (1) selon les revendications précédentes, **caractérisé en ce que** l'entrée (5) est disposée de façon tangentielle dans la partie inférieure de la paroi cylindrique du boîtier.

9. Insert de filtre (1) selon les revendications précédentes, **caractérisé en ce que** le boîtier (3) est équipé d'une tubulure de purgé (17) qui, dans le compartiment d'entrée (4) du boîtier, est disposée au-dessus de l'élément filtrant (2) de type cartouche, et qui peut être fermée par une soupape de purge (18).

10. Insert de filtre (1) selon la revendication 9, **caractérisé en ce que** la tubulure de purge (17) est séparée du compartiment (4) du boîtier à purger par un filtre hydrophobe (20) perméable aux gaz d'une grosseur de pores située dans la plage de 0,2 à 0,45 µm.
